# EUROPEAN PATENT SPECIFICATION

(11) **EP 1 103 398 B1**
(45) Date of publication and mention of the grant of the patent: **03.12.2003**
(21) Application number: 00123639.7
(22) Date of filing: 30.10.2000
(51) Int. Cl.: B60H 1/00

(54) **Heat exchange unit for vehicles**
Wärmetauschereinheit für Kraftfahrzeuge
Unité d'échange de chaleur d'un véhicule automobile

(30) Priority: 26.11.1999 IT TO991037
(43) Date of publication of application: 30.05.2001
(73) Proprietor: DENSO THERMAL SYSTEMS S.p.A., 10046 Poirino (Torino) (IT)
(72) Inventor: Palmisano, Antonio, 10046 Poirino (IT); Aragno, Giovanni, 10046 Poirino (IT)
(74) Representative: Marchitelli, Mauro

(56) References cited:
- WO-A-97/42049
- DE-A- 19 857 512
- US-A- 4 564 168
- US-A- 5 429 181
- US-A- 5 509 199

## Description

### TEXT OF THE DESCRIPTION

The present invention relates to a heat exchange unit for vehicles, according to the pre-characterizing portion of claim 1, which is known from US-A-5429181.

US-A-5429181 discloses a heat exchanger assembly comprising a heat exchanger, having a tubular header, and a support member to which the heat exchanger is secured by a fastening device. The heat exchanger is typically a condenser of a motor vehicle air conditioning system. The fastening device comprises a first fastening element having a concave central portion and an extension which is provided with gripping means; a second fastening element having a concave central portion and an extension having further gripping means which cooperate with the gripping means of the first fastening element.

WO-A-9742049 discloses a radiator and condenser assembly, in which the radiator includes at least one radiator end tank which comprises a condenser mounting bracket including a, receiving housing for receiving a shaped end cap of the condenser.

The object of the present invention is to provide a heat exchange unit for vehicles of the abovementioned type, which is able to achieve a reduction in the time and the costs associated with assembly of the condenser on the radiator and a reduction in the assembly tolerances.

According to the present invention, this object is achieved by a heat exchange unit having the characteristic features forming the subject of the main claim.

The present invention will now be described in detail with reference to the accompanying drawings provided purely by way of a non-limiting example in which:
- Figure 1 is an exploded and partial perspective view of a heat exchange unit for vehicles according to the present invention, and
- Figure 2 is a cross-section on a larger scale along the line II-II of Figure 1.

With reference to the drawings, 10 denotes a heat exchange unit for vehicles comprising a radiator 12 and a condenser 14.

The radiator 12 comprises a core 16 formed by a plurality of pipes and fins and a pair of plastic receiving tanks (only one of which is visible in the Figures) arranged at the ends of the core 16. Each of the receiving tanks 18 is obtained by means of injection moulding and comprises a pair of cradle-shaped seats 20 formed integrally on a surface of the receiving tank 18 directed towards the condenser 14. A boss 22 is formed integrally with the receiving tank 18, opposite each cradle-shaped seat 20. Each boss 22 has a hole 24 designed to receive a fixing screw 26 for example of the self-tapping type. Each receiving tank 18 also comprises a pair of positioning elements 28, 30 having respective flat surfaces facing each other. The positioning elements 28, 30 are also formed integrally with the receiving tank 18 during injection-moulding thereof.

In a manner known per se, each receiving tank 18 also has a pair of positioning and fixing pins 32 and an inlet/outlet union 34 for the heat exchange fluid.

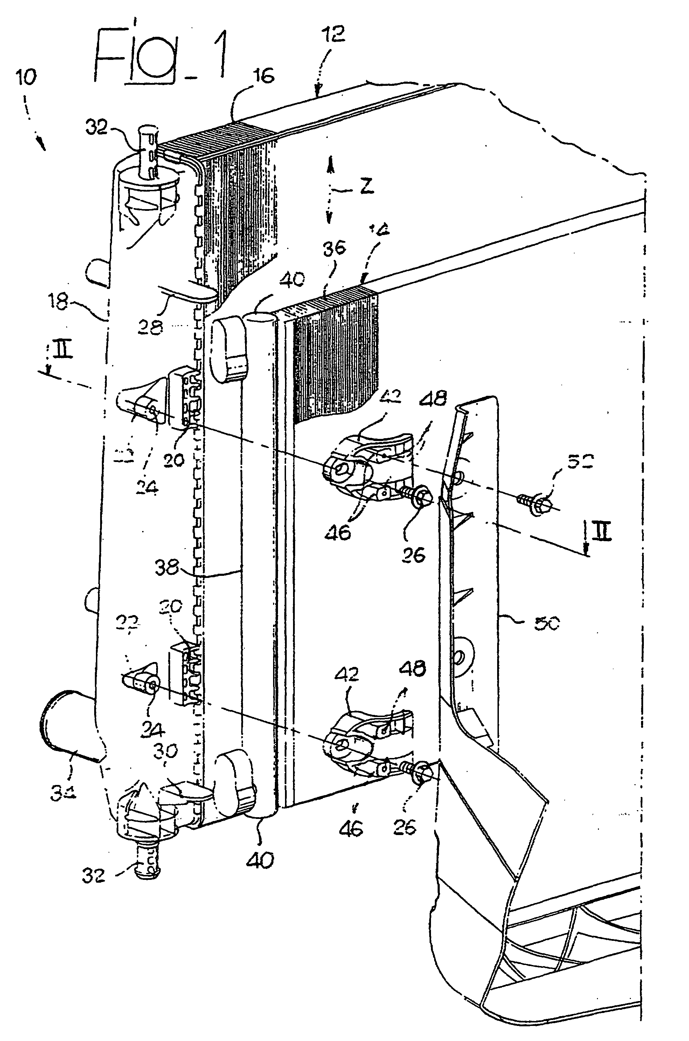

The condenser 14 comprises a core 36 and a pair of tubular metal headers 38 (only one of which can be seen in the Figures) arranged at the ends of the core 36. Each header 38 has a pair of flat end surfaces 40 which are positioned between the flat facing surfaces of the positioning elements 28, 30. These elements are arranged at a mutual distance equal to the height of the headers 38, so as to determine positioning of the condenser 14 with respect to the radiator 12 in the direction indicated by the double-headed arrow Z in Figure 1.

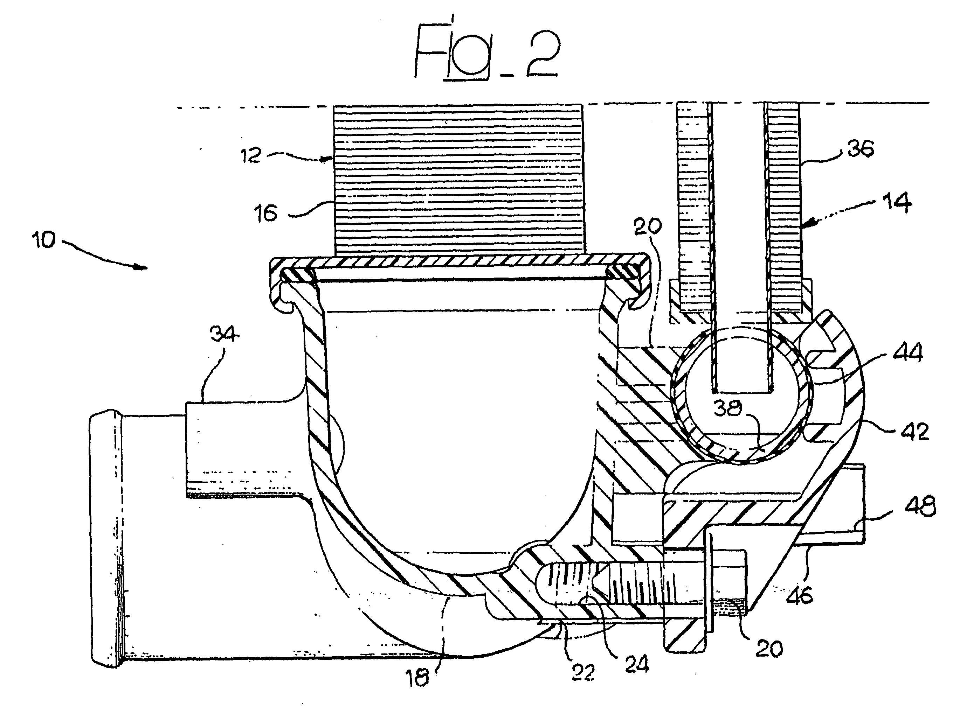

The condenser 14 is fixed to the radiator 12 by means of flanges 42 which press each header 38 against the cradle-shaped seats 20. The flanges 44 are made of injection-moulded plastic and are fixed to the bosses 22 formed on each receiving tank 18 by means of self-tapping screws 26. The flanges 42 and the cradle-shaped seats 20 have curved surfaces with a diameter substantially equal to the external diameter of the headers 18. As shown in Figure 2, with tightening of the screws 26, the header 38 is pressed between the opposite cylindrical surfaces of the flanges 42 and the cradle-shaped seats 20. As shown in Figure 2, a layer of adhesive rubber 44 may be arranged between the surfaces of the header 38 making contact with the cradle-shaped seat 20 and the fixing flange 42, in order to eliminate the play in the connection and reduce the transmission of vibrations between the components of the heat exchange unit 10.

As shown in Figure 1, the flanges 42 may be provided with integral bosses 46 provided with holes 48. The bosses 46 may be used for fixing, to the heat exchange unit, accessory components such as, for example, a front guide plate 50 which is fixed to the flanges 42 by means of screws 52.

As a result of the solution according to the present invention, it is possible to eliminate a station for the assembly or welding of metal brackets onto the condenser as well as achieve a consequent reduction in the time required for assembly of the condenser. The plastic brackets 42 which are used to fix the condenser to the radiator are less costly than traditional metal brackets. Moreover, with the system according to the invention it is possible to reduce the assembly tolerances owing to a reduction in the number of components used to connect the condenser and radiator together. With the system it is also possible to fix accessory components to the heat exchange unit owing to the bosses 46 formed integrally on the brackets 42.

## Claims

1. Heat exchange unit for vehicles, comprising:
- a radiator (12) with a pair of receiving tanks (18) made of plastic,
- a condenser (14) comprising a pair of tubular headers (38), and
- means for fixing the condenser (14) to the radiator (12),
said fixing means comprising:
- at least one cradle-shaped seat (20) formed integrally with a receiving tank (18),
- at least one flange (42) fixed by means of at least one screw (26) to the receiving tank (18) and formed so as to press the header (38) against the abovementioned cradle-shaped seat (20), and
- a pair of positioning elements (28, 30) formed integrally with each receiving tank (18) and provided with flat surfaces facing each other
**characterized in that** the pair of positioning elements is arranged at a distance substantially equal to the height of each of said headers (38) and that the headers (38) extend between the flat surfaces of the positioning elements (28, 30).

2. Heat exchange unit according to Claim 1, **characterized in that** the abovementioned flange (42) is made of injection-moulded plastic.

3. Heat exchange unit according to Claim 2, **characterized in that** said flange (42) is provided with an integral boss (46) provided with a hole (48) designed to receive a fixing screw (52).

4. Heat exchange unit according to Claim 1, **characterized in that** it comprises a layer of elastomer and/or adhesive material (44) arranged between the surfaces of the header (38) making contact with the cradle-shaped seat (20) and the flange (42).

## Patentansprüche

1. Wärmetauschereinheit für Kraftfahrzeuge, umfassend:
- einen Radiator (12) mit einem Paar Aufnahmebehälter (18) aus Kunststoff,
- einen Kondensator (14) mit einem Paar Sammelrohre (38) und
- Mittel zum Befestigen des Kondensators (14) an dem Radiator (12),
wobei die Befestigungsvorrichtung umfasst:
- wenigstens einen gabelförmigen Sitz (20), der einstückig mit einem Aufnahmebehälter (18) ausgebildet ist,
- wenigstens einen Flansch (42), der mittels wenigstens einer Schraube (26) an dem Aufnahmebehälter (18) befestigt und so geformt ist, dass er das Sammelrohr (38) gegen den oben erwähnten gabelförmigen Sitz (20) drückt, und
- ein Paar Positionierungselemente (28, 30), die einstückig mit jedem Aufnahmebehälter (18) ausgebildet und mit einander zugewandten ebenen Oberflächen ausgestattet sind,
**dadurch gekennzeichnet, dass**
das Paar Positionierungselemente in einem Abstand angeordnet ist, der weitgehend der Höhe jedes der Sammelrohre (38) entspricht und die Sammelrohre (38) zwischen den ebenen Flächen der Positionierungselemente (28, 30) verlaufen.

2. Wärmetauschereinheit gemäß Anspruch 1, **dadurch gekennzeichnet, dass** der oben erwähnte Flansch (42) aus Spritzguss-Kunststoff hergestellt ist.

3. Wärmetauschereinheit gemäß Anspruch 2, **dadurch gekennzeichnet, dass** der Flansch (42) mit einem integrierten Anguss (46) versehen ist, der mit einem Loch (48) ausgestattet ist, das zur Aufnahme einer Befestigungsschraube (52) konzipiert ist.

4. Wärmetauschereinheit gemäß Anspruch 1, **dadurch gekennzeichnet, dass** diese eine Elastomer- und/oder Klebstoffschicht (44) umfasst, die zwischen den Oberflächen des Sammelrohrs (38) angeordnet ist, das den Kontakt mit dem gabelförmigen Sitz (20) und dem Flansch (42) herstellt.

## Revendications

1. Unité d'échange de chaleur pour véhicules, comprenant:
- un radiateur (12) comportant une paire de réservoirs de réception (18) formés d'une matière plastique,
- un 'condenseur (14) comprenant une paire de collecteurs tubulaires (38), et
- des moyens pour fixer le condenseur (14) au radiateur (12),
lesdits moyens de fixation comprenant:
- au moins un siège en forme de berceau (20) formé d'un seul tenant avec un réservoir de réception (18),
- au moins une bride (42) fixée à l'aide d'au moins une vis (26) au réservoir de réception (18) et formée de manière à repousser le collecteur (38) contre le siège en forme de berceau (20) mentionné précédemment, et
- une paire d'éléments de positionnement (28, 30), formés d'un seul tenant avec chaque réservoir de réception (18) et pourvus de surfaces plates se faisant face,
**caractérisée en ce que** la paire d'éléments de positionnement est disposée à une distance sensiblement égale à la hauteur de chacun des collecteurs (38) et que les collecteurs (38) s'étendent entre les surfaces plates des éléments de positionnement (28, 30) .

2. Unité d'échange de chaleur selon la revendication 1, **caractérisée en ce que** la bride mentionnée précédemment (42) est formée par une matière plastique moulée par injection.

3. Unité d'échange de chaleur selon la revendication 2, **caractérisée en ce que** ladite bride (42) est pourvue d'un bossage intégral (46) pourvu d'un trou (48) agencé de manière à recevoir une vis de fixation (52).

4. Unité d'échange de chaleur selon la revendication 1, **caractérisée en ce qu'**elle comprend une couche d'un matériau élastomère et/ou adhésif (44) disposée entre les surfaces du collecteur (38) et établissant un contact avec le siège en forme de berceau (20) et la bride (42) .
